# DEMANDE DE BREVET EUROPEEN

(11) **EP 0 634 320 A1**
(43) Date de publication de la demande: **18.01.1995**
(21) Numéro de dépôt: 94401523.9
(22) Date de dépôt: 04.07.1994
(51) Int. Cl.: B64C 25/12

(54) **Train d'atterrissage d'aéronef, du type à relevage latéral**

(30) Priorité: 15.07.1993 FR 9308686
(71) Demandeur: MESSIER-DOWTY SA, F-78140 Velizy Villacoublay (FR)
(72) Inventeur: Derrien, Michel, F-78000 Versailles (FR); Chauvet, Dominique, F-92320 Chatillon (FR)
(74) Mandataire: Jaunez, Xavier

(57) **Abrégé**

L'invention concerne un train d'atterrissage d'aéronef, du type à relevage latéral, et à roues en diabolo.

Conformément à l'invention, la jambe (50) est formée d'un caisson en L renversé (10) dont les deux branches (11, 12) sont articulées entre elles, avec une première branche formant poutre (11) articulée sur la structure d'aéronef, et une seconde branche (12) en extrémité de laquelle est articulé un balancier (14) porteur de roues. Le balancier (14) est en outre relié à la première branche (11) par un amortisseur (17). Une barre directrice de commande (23) relie enfin la seconde branche (12), par une chape (25) montée tourillonnante sur ladite branche, à la structure d'aéronef, de façon à avancer cette seconde branche lors du relevage du train, cette avancée produisant une rétraction des roues du fait que l'amortisseur (17) agit alors comme une seconde barre directrice.

## Description

L'invention concerne les trains d'atterrissage d'aéronef, du type à relevage latéral, comportant une jambe articulée sur une structure d'aéronef équipée inférieurement d'un train de roues, ainsi qu'un vérin de manoeuvre assurant le pivotement de cette jambe autour de son axe.

On connaît de tels trains d'atterrissage de fuselage dont la jambe est formée d'un caisson rigide en L renversé, en extrémité duquel est articulé un balancier s'étendant vers l'arrière et portant une roue unique, ou plus souvent deux roues en diabolo. Le caisson rigide est articulé sur la structure d'aéronef par une branche qui est horizontale ou légèrement inclinée, et un amortisseur relie cette branche au balancier.

La longueur du train est dans ce cas essentiellement la même en position train rentré et en position train sorti (avant le contact des roues avec le sol) : l'inclinaison éventuelle de l'axe d'articulation du caisson rigide sur la structure d'avion produit certes un léger avancement de la roue lors du relevage du train, mais cet avancement reste minime.

On peut être amené à rechercher des trains d'atterrissage dont la structure leur permet d'être long à l'atterrissage, et court au roulage et en position train rentré, pour éviter un dimensionnement latéral excessif du carénage associé de l'aéronef, et éviter éventuellement aussi d'avoir à modifier des cadres existants, afin de pouvoir disposer d'aéronefs modifiés pour accepter une charge plus élevée, et par suite devant être équipés de pneumatiques de plus grandes dimensions, tout en conservant la même structure de fuselage.

Or, les atterrisseurs équipés d'un dispositif de raccourcissement de leur jambe au relevage sont en général de structure complexe et encombrante.

L'état de la technique peut être complété en mentionnant les documents EP-A-0 031 601 et FR-A-1.245.515, illustrant des solutions réalisées en trois parties, avec une partie horizontale articulée sur la structure d'avion, une partie verticale articulée sur cette partie horizontale, et une barre de structure pour contreventer cette partie verticale (cette barre faisant également fonction de barre directrice au relevage).

L'invention a précisément pour but de résoudre ce problème, en concevant un train d'atterrissage dont la structure permette d'obtenir, lors du relevage du train, une rétraction et une avancée de la roue ou des deux roues (roues en diabolo), en vue d'une compacité aussi grande que possible lorsque le train est rentré et d'une disposition optimale vis-à-vis de la structure.

L'invention a également pour objet de réaliser un train d'atterrissage dont la structure permette une variation de sa géométrie lors du relevage qui soit à la fois précise et fiable, et de plus sans séquence.

Il s'agit plus particulièrement d'un train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe est formée d'un caisson en L renversé dont les deux branches sont articulées entre elles, avec une première branche formant poutre qui est articulée sur la structure d'aéronef, et une seconde branche en extrémité de laquelle est articulé un balancier porteur de roues en pouvant tourner autour d'un axe qui, en position train bas, est sensiblement perpendiculaire au plan longitudinal médian de l'aéronef ;
- le balancier est relié à la première branche du caisson articulé par un amortisseur qui est articulé sur ce balancier en un point situé entre l'axe d'articulation dudit balancier et l'axe de roues ;
- une barre directrice de commande relie en outre la seconde branche du caisson articulé, par une chape montée tourillonnante sur ladite branche, à la structure d'aéronef, ladite barre étant agencée pour avancer cette seconde branche lors du relevage du train, cette avancée produisant une rétraction des roues du fait que l'amortisseur agit alors comme une seconde barre directrice.

De préférence, la barre directrice de commande est agencée en arrière de la seconde branche du caisson articulé, de façon à pousser sur ladite branche lors du relevage du train tout en rétractant les roues. On pourrait naturellement prévoir un agencement vers l'avant, mais cette solution impliquerait un encombrement longitudinal important.

Avantageusement alors, la chape tourillonnante d'accrochage de la barre directrice de commande est agencée au voisinage de l'extrémité de la seconde branche du caisson articulé.

Il est par ailleurs intéressant, notamment pour les gros avions, de prévoir des moyens de contreventement associés à la jambe de train.

Selon un premier mode d'exécution, le train d'atterrissage comporte alors une petite contre-fiche articulée dont les deux bras sont dans un plan transversal passant par l'axe d'articulation des deux branches du caisson articulé, et ce dans toutes les positions angulaires dudit caisson. Avantageusement, cette petite contre-fiche comporte un premier bras articulé sur la structure d'aéronef, et un second bras articulé sur un tourillon monté sur un appendice de la seconde branche du caisson articulé, et l'axe dudit tourillon coïncide avec l'axe d'articulation des deux branches dudit caisson.

Selon une autre variante, le train d'atterrissage comporte une contre-fiche articulée dont les deux bras peuvent en outre pivoter entre eux grâce à un cardan prévu au niveau de leur articulation. Il peut s'avérer alors intéressant que cette contre-fiche comporte un premier bras articulé sur la structure d'aéronef, et un second bras articulé sur un appendice agencé en partie basse de la seconde branche du caisson articulé, ladite contre-fiche étant en outre agencée de telle façon que ses deux bras soient, en position train bas, dans un plan transversal qui est en arrière du plan transversal passant par l'axe d'articulation des deux branches dudit caisson.

D'autres caractéristiques et avantages de l'invention apparaîtront plus clairement à la lumière de la description qui va suivre et des dessins annexés, concernant un mode de réalisation particulier, en référence aux figures où :
- les figures 1 et 2 sont des vues respectivement frontale et latérale d'un train d'atterrissage à caisson articulé conforme à l'invention, en position train bas (la position train haut est seulement schématisée par les roues représentées en traits mixtes), ledit train comportant ici une petite contre-fiche pour le contreventement ;
- les figures 3 et 4 sont des vues partielles selon les flèches III et IV de la figure 1, montrant respectivement l'agencement particulier de la première branche formant poutre du caisson articulé, et les deux bras de la petite contre-fiche ;
- la figure 5 est une vue frontale du train précité, en position train haut (rentré) ;
- la figure 6 est une vue de dessus montrant le train symétrique du précédent, en position train haut (rentré) ;
- les figures 7 et 8, qui sont à rapprocher des figures 1 et 2, illustrent une variante équipée de moyens de contreventement différents (contre-fiche avec un cardan au niveau de son articulation), la position étant celle du train bas ;
- la figure 9 est une vue partielle selon la flèche IX de la figure 7, permettant de mieux distinguer la contre-fiche à cardan précité ;
- les figures 10 et 11, qui sont à rapprocher des figures 5 et 6, illustrent cet autre train d'atterrissage en position train haut (rentré).

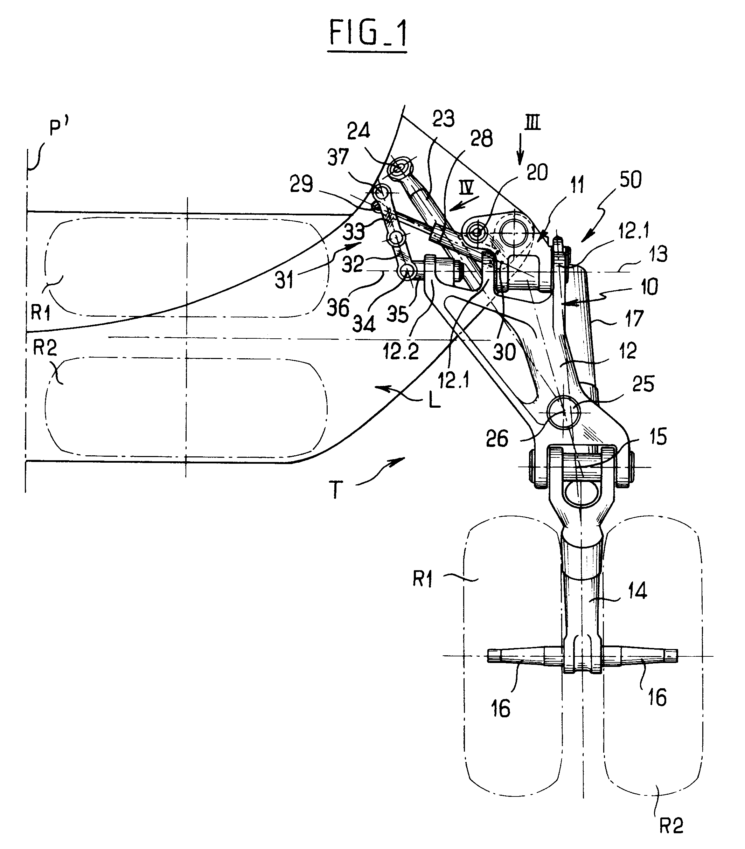

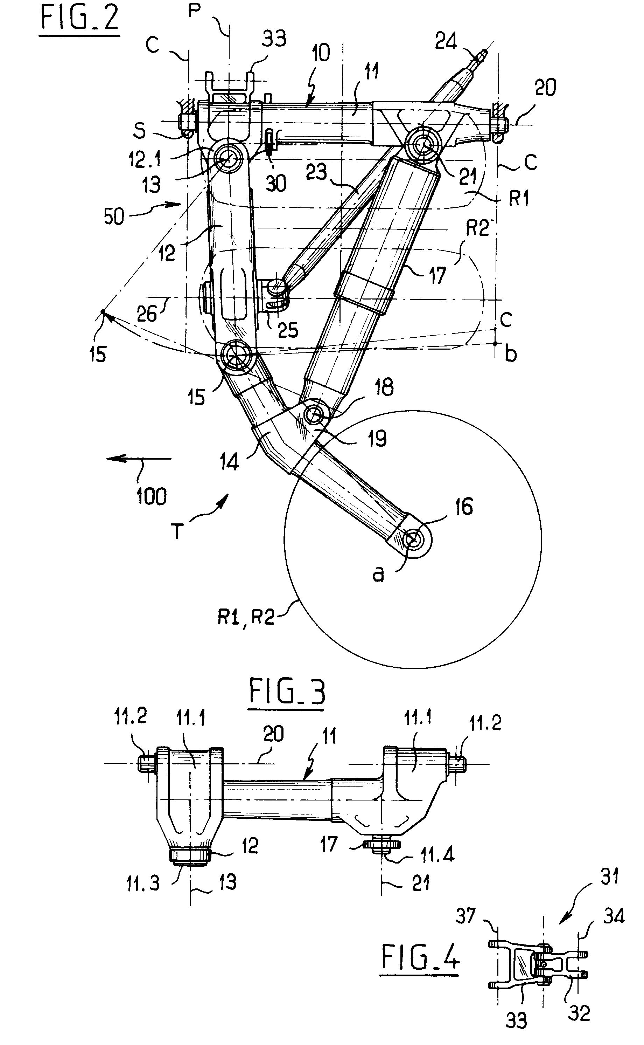

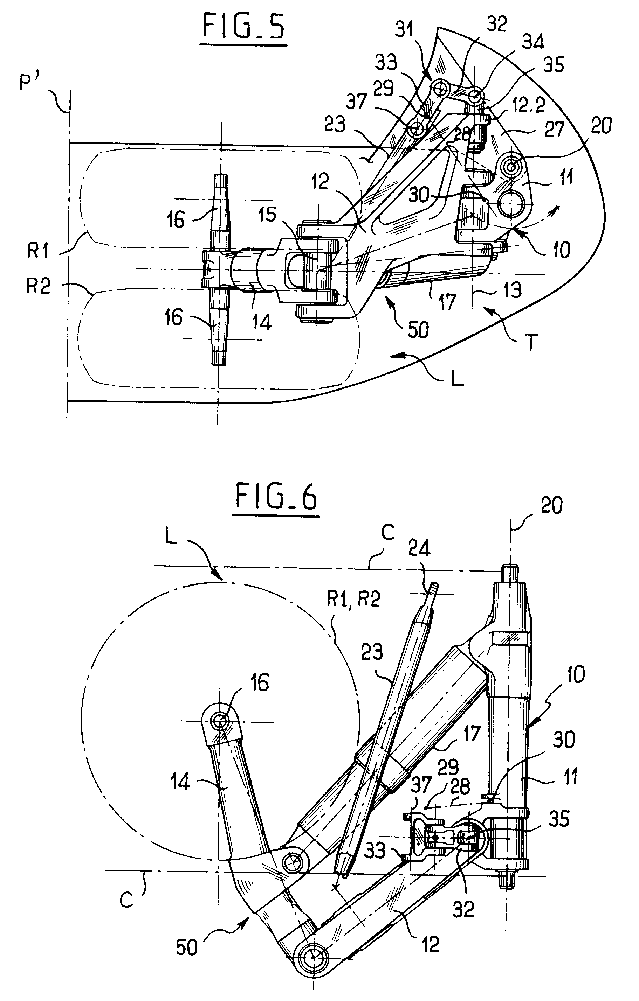

On va maintenant décrire, en se référant aux figures 1 à 6, un train d'atterrissage T conforme à l'invention, ledit train étant du type à relevage latéral, et étant reçu, en position train haut, dans un logement associé L de la structure d'aéronef concernée, lequel logement est délimité par deux voiles transversaux C que l'on a schématisés ici par des traits mixtes sur les figures 2 et 6.

Le train d'atterrissage T comporte une jambe 50 articulée sur une structure d'aéronef S, et équipée inférieurement d'un train de roues R1 et R2, ainsi qu'un vérin de manoeuvre 28 (visible sur la figure 1, mais seulement schématisé par des traits mixtes sur les figures 5 et 6) assurant le pivotement de cette jambe autour de son axe. Le vérin de manoeuvre 28 est ici accroché par sa tige, en 29, à la structure d'avion, et par son cylindre, en 30, sur un appendice de la première branche 11 du caisson articulé 10. Sur la figure 2, la direction avant est repérée par la flèche 100.

La jambe 50 est formée d'un caisson en L renversé 10, dont les deux branches 11, 12, sont articulées entre elles autour d'un axe 13. Il s'agit donc d'un caisson articulé, à la différence des caissons en L renversé rigides des trains d'atterrissage connus. Le caisson articulé 10 comporte ainsi une première branche 11 formant poutre qui est articulée sur la structure d'aéronef S par des tourillons d'extrémité 11.2, l'axe d'articulation associé étant référencé 20. La seconde branche 12 du caisson articulé 10 présente supérieurement deux appendice 12.1 associés à une extrémité de la branche formant poutre 11, au niveau de l'axe d'articulation 13 précité. A son extrémité libre, la branche 12 porte un balancier 14, dont une extrémité est articulée en 15 en bout de la branche 12, et l'autre extrémité porte un axe de roues 16 associé ici à un ensemble de roues R1, R2 montées en diabolo, c'est-à-dire de part et d'autre du plan médian de ce balancier. Le balancier 14 peut ainsi tourner autour de l'axe 15 qui, en position train bas, est sensiblement perpendiculaire au plan longitudinal médian de l'aéronef P'.

Le balancier 14 est en outre relié à la première branche 11 du caisson articulé 10 par un amortisseur 17. Le balancier 14 présente à cet effet un appendice 19 par lequel l'extrémité de la tige de l'amortisseur 17 est articulée en 18, le corps dudit amortisseur étant articulé en 21 sur la première branche 11 du caisson articulé 10. La figure 3 permet de mieux distinguer la forme particulière de cette première branche 11 du caisson articulé 10, avec ses deux extrémités 11.1 présentant chacune un tourillon d'articulation 11.2 correspondant à l'axe 20 de pivotement de la jambe. Une extrémité de la branche formant poutre 11 présente frontalement un premier tourillon 11.3 associé à l'appendice 12.1 de la seconde branche 12 du caisson articulé, tandis que l'autre extrémité de cette branche formant poutre présente frontalement un tourillon 11.4 correspondant à l'accrochage de l'amortisseur 17. Dans la pratique, la première branche 11 formant poutre du caisson articulé 10 sera montée sur un appendice 27 de la structure d'aéronef, cet appendice n'ayant été représenté que sur la figure 5.

Le train d'atterrissage T selon l'invention comporte en outre une barre directrice de commande 23 accrochée en 24 sur la structure d'aéronef, et, à son autre extrémité, sur une chape 25 montée tourillonnante sur la seconde branche 12 du caisson articulé 10. On a noté 26 l'axe d'articulation de la chape tourillonnante 25, ladite chape constituant ainsi un cardan axé.

La combinaison de l'articulation 13 entre les deux branches 11, 12 du caisson articulé 10, et de la barre directrice 23 de commande a pour effet, lors du relevage du train, de tirer le balancier 14 porteur de roues vers l'avant: l'amortisseur agissant alors comme une seconde barre directrice, on obtient, de façon parfaitement synchronisée, un avancement du balancier, et donc des roues, ainsi qu'une rétraction desdites roues. Cette combinaison de mouvements est parfaitement desmodromique, de sorte que la géométrie du train d'atterrissage varie lors du relevage de façon à la fois précise et fiable, ce qui permet de s'assurer que les roues viennent s'inscrire exactement entre les cadres concernés C, ainsi que cela est visible sur la figure 6.

En l'espèce, la barre directrice de commande 23 est agencée en arrière de la seconde branche 12 du caisson articulé 10, de façon à pousser sur ladite branche lors du relevage du train tout en rétractant les roues. Une telle disposition permet alors de concentrer les points d'attache entre les deux cadres C, ce qui permet d'obtenir une compacité optimale. Il est naturellement possible d'envisager une disposition différente, avec une barre directrice de commande disposée en avant de la seconde branche du caisson articulé: dans ce cas, une telle barre exercerait une traction sur la seconde branche du caisson lors du relevage du train. Cependant, une telle variante aurait pour effet d'augmenter sensiblement l'encombrement longitudinal.

La chape tourillonnante 25 d'accrochage de la barre directrice de commande 23 est de préférence agencée au voisinage de l'extrémité inférieure de la seconde branche 12 du caisson articulé 10, pour exercer de façon optimale l'effort de poussée sur cette seconde branche lors du relevage du train. De plus, cette barre directrice 23 assure la tenue des charges longitudinales exercées sur le caisson en position train bas.

Sur la figure 2, on a représenté le train d'atterrissage selon l'invention en position train bas, amortisseur tout détendu. L'axe de roues 16 est alors au niveau d'un point a. On a également noté sur cette figure les points b et c, qui correspondent respectivement à la position sous charge statique, et à la position de compression maximale de l'amortisseur 17. On a également fait apparaître sur cette figure le pivotement de la seconde branche 12 du caisson articulé lors du relevage du train, afin de mettre en évidence l'avancement important que subit le balancier 14 lors de ce mouvement. Ainsi que cela est aisé à comprendre, on ne pouvait obtenir un tel avancement en se contentant d'incliner l'axe d'articulation d'un caisson rigide en L renversé conforme aux techniques connues.

L'invention entend également résoudre un autre problème qui est celui du contreventement, car il est fréquemment prévu des moyens de contreventement associés à la jambe d'un train d'atterrissage relevable pour de gros avions. Cependant, le fait que le caisson de la jambe soit articulé complique quelque peu la mise en place de moyens de contreventement. On va maintenant décrire deux solutions à ce problème, données naturellement à titre d'exemple seulement.

Conformément à un premier mode d'exécution, le train d'atterrissage comporte une petite contre-fiche articulée 31, se composant de deux bras 32, 33, qui sont dans un plan transversal P passant par l'axe d'articulation 13 des deux branches 11, 12 du caisson articulé 10, et ce dans toutes les positions angulaires dudit caisson. En l'espèce, la petite contrefiche 31 comporte un premier bras 33, qui est articulé en 37 sur la structure d'aéronef, et un second bras 32, qui est articulé en 34 sur un tourillon 35 monté sur un appendice arrière 12.2 de la seconde branche 12 du caisson articulé 10. L'axe 36 du tourillon 35 coïncide ici avec l'axe d'articulation 13 des deux branches 11, 12 du caisson articulé 10. Grâce à une telle disposition, on est certain de ne pas trouver de mouvement de débattement ou de rotulage de la contre-fiche lors du pivotement de la jambe de train.

Le fait que les deux bras 32, 33 de la petite contre-fiche articulée 31 restent dans ce plan transversal P précité, fait qu'en position train bas, la seconde branche 12 du caisson articulé 10 participe elle-même au contreventement, à la façon d'un "troisième bras" de contrefiche. La vue partielle de la figure 4 permet de mieux appréhender la structure de cette petite contre-fiche 31.

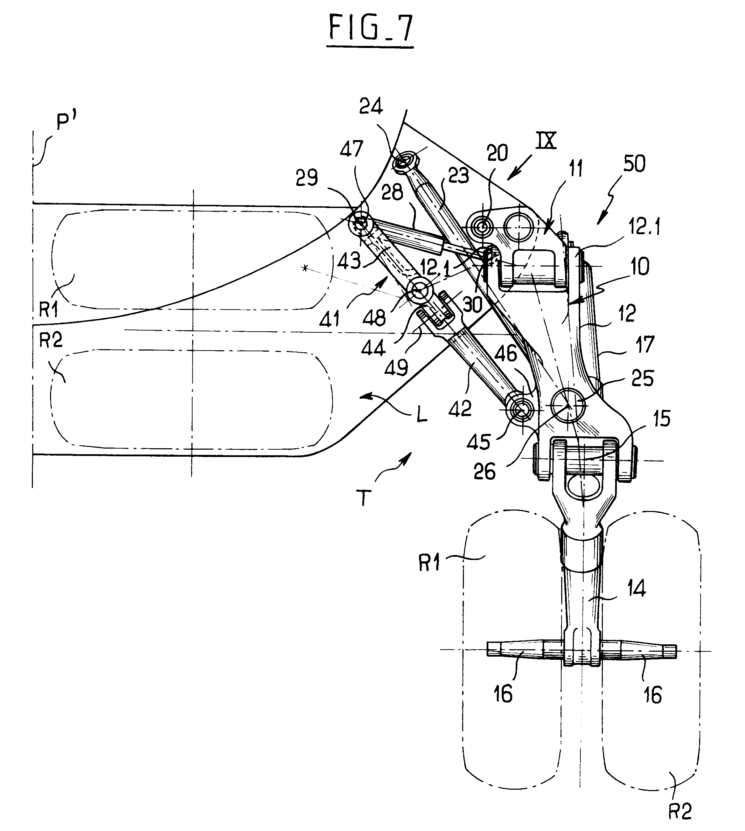

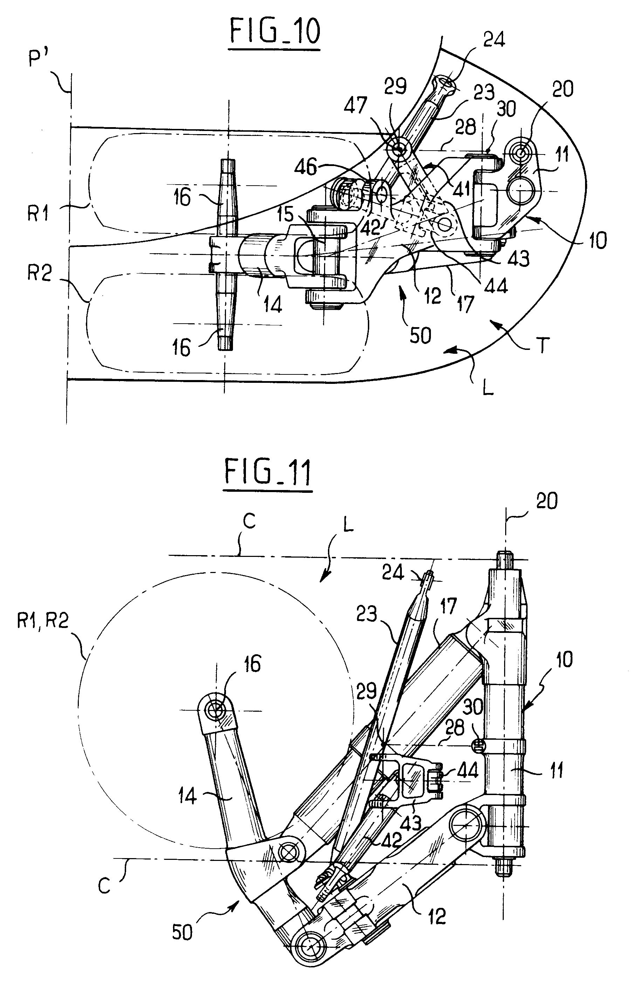

On va maintenant décrire, en se référant aux figures 7 à 11, un deuxième mode d'exécution du train d'atterrissage à caisson articulé selon l'invention, ledit train ne différant du train précédemment décrit que par les moyens de contreventement utilisés. De ce fait, on a repris pour les organes communs les mêmes références, et ces organes ne feront pas l'objet d'une description particulière. Comme précédemment, le vérin de manoeuvre 28, accroché en 29 sur la structure d'avion et en 30 sur un appendice de la première branche 11 du caisson articulé 10, est visible sur la figure 7, mais seulement schématisé par des traits mixtes sur les figures 10 et 11.

Au lieu d'accrocher un bras d'une petite contre-fiche en partie haute de la seconde branche du caisson articulé, au niveau d'un tourillon calé sur l'axe d'articulation des deux branches dudit caisson articulé, il est maintenant prévu une contre-fiche articulée 41 dont les deux bras 42, 43 peuvent en outre pivoter entre eux grâce à un cardan 44 prévu au niveau de leur articulation.

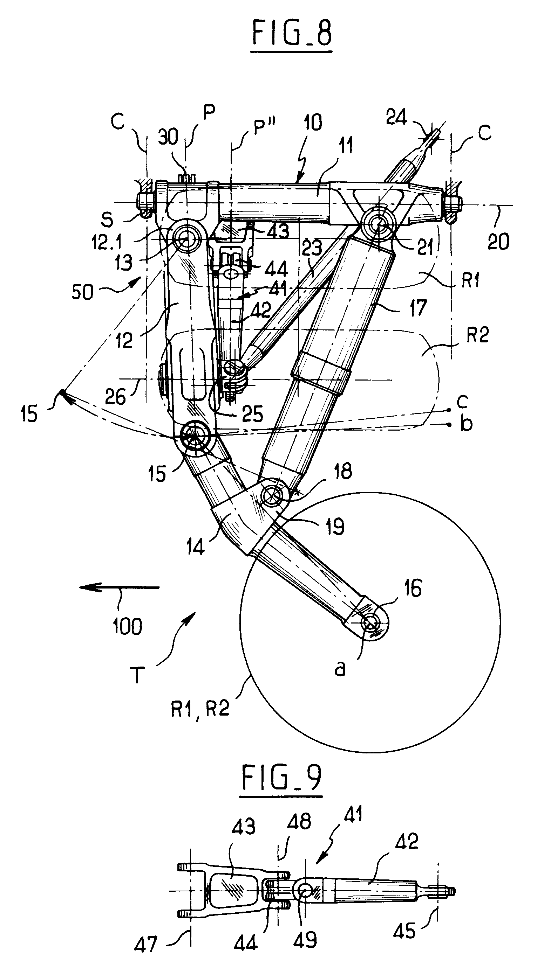

On distingue ainsi un premier bras 43, qui est articulé en 47 sur la structure d'aéronef, et un second bras 42, qui est articulé sur un appendice 46 agencé en partie basse de la seconde branche 12 du caisson articulé 10. On a par ailleurs noté 48 et 49 les deux axes orthogonaux du cardan 44, respectivement associés au premier bras 43 et au second bras 42 de ladite contre-fiche. L'agencement de cette contre-fiche 41 sera mieux appréhendé en se référant à la vue partielle de la figure 9.

Ainsi que cela est visible sur les figures 7 à 9, la contre-fiche 41 est en outre agencée de telle façon que ses deux bras 42, 43 soient disposés, en position train bas, dans un plan transversal P" qui est en arrière du plan transversal P passant par l'axe d'articulation 13 des deux branches 11, 12 du caisson articulé 10. On préserve donc encore la compacité du train d'atterrissage, malgré une légère complication de la structure de cette contre-fiche à cardan.

Ainsi que cela est aisé à comprendre, la présence du cardan 44 permet à la seconde branche 12 du caisson articulé 10 de suivre le mouvement d'avancée du balancier lors du relevage du train, ce que l'on n'aurait pas pu obtenir avec une contre-fiche de type traditionnel ne possédant aucune liberté de pivotement au niveau de son articulation.

On est ainsi parvenu à réaliser un train d'atterrissage dont la structure permet d'obtenir, lors du relevage du train, une rétraction et une avancée de la roue ou des deux roues, en vue d'une compacité optimale lorsque le train est rentré. En outre, la structure du train d'atterrissage reste simple, et elle permet une variation de sa géométrie, lors du relevage, qui est à la fois précise et fiable.

L'invention n'est pas limitée aux modes de réalisation qui viennent d'être décrits, mais englobe au contraire toute variante reprenant, avec des moyens équivalents, les caractéristiques essentielles énoncées plus haut

## Revendications

1. Train d'atterrissage d'aéronef, du type à relevage latéral, comportant une jambe articulée sur une structure d'aéronef et équipée inférieurement d'un train de roues, ainsi qu'un vérin de manoeuvre assurant le pivotement de cette jambe autour de son axe, caractérisé en ce que :
- la jambe (50) est formée d'un caisson en L renversé (10) dont les deux branches (11, 12) sont articulées entre elles, avec une première branche formant poutre (11) qui est articulée sur la structure d'aéronef, et une seconde branche (12) en extrémité de laquelle est articulé un balancier (14) porteur de roues en pouvant tourner autour d'un axe (15) qui, en position train bas, est sensiblement perpendiculaire au plan longitudinal médian de l'aéronef ;
- le balancier (14) est relié à la première branche (11) du caisson articulé (10) par un amortisseur (17) qui est articulé sur ce balancier en un point (18) situé entre l'axe d'articulation (15) dudit balancier et l'axe de roues (16) ;
- une barre directrice de commande (23) relie en outre la seconde branche (12) du caisson articulé (10), par une chape (25) montée tourillonnante sur ladite branche, à la structure d'aéronef, ladite barre étant agencée pour avancer cette seconde branche lors du relevage du train, cette avancée produisant une rétraction des roues du fait que l'amortisseur (17) agit alors comme une seconde barre directrice.

2. Train d'atterrissage selon la revendication 1, caractérisé en ce que la barre directrice de commande (23) est agencée en arrière de la seconde branche (12) du caisson articulé (10), de façon à pousser sur ladite branche lors du relevage du train tout en rétractant les roues.

3. Train d'atterrissage selon la revendication 2, caractérisé en ce que la chape tourillonnante (25) d'accrochage de la barre directrice de commande (23) est agencée au voisinage de l'extrémité de la seconde branche (12) du caisson articulé (10).

4. Train d'atterrissage selon l'une des revendications 1 à 3, dans lequel des moyens de contreventement sont associés à la jambe de train, caractérisé en ce qu'il comporte une petite contre-fiche articulée (31) dont les deux bras (32, 33) sont dans un plan transversal (P) passant par l'axe d'articulation (13) des deux branches (11, 12) du caisson articulé (10) , et ce dans toutes les positions angulaires dudit caisson.

5. Train d'atterrissage selon la revendication 4, caractérisé en ce que la petite contre-fiche (31) comporte un premier bras (33) articulé sur la structure d'aéronef, et un second bras (32) articulé sur un tourillon (35) monté sur un appendice (12.2) de la seconde branche (12) du caisson articulé (10), et l'axe (36) dudit tourillon coïncide avec l'axe d'articulation (13) des deux branches (11, 12) dudit caisson.

6. Train d'atterrissage selon l'une des revendications 1 à 3, dans lequel des moyens de contreventement sont associés à la jambe de train, caractérisé en ce qu'il comporte une contre-fiche articulée (41) dont les deux bras (42, 43) peuvent en outre pivoter entre eux grâce à un cardan (44) prévu au niveau de leur articulation.

7. Train d'atterrissage selon la revendication 6, caractérisé en ce que la contre-fiche (41) comporte un premier bras (43) articulé sur la structure d'aéronef, et un second bras (42) articulé sur un appendice (46) agencé en partie basse de la seconde branche (12) du caisson articulé (10), ladite contre-fiche étant en outre agencée de telle façon que ses deux bras (42, 43) soient, en position train bas, dans un plan transversal (P'') qui est en arrière du plan transversal (P) passant par l'axe d'articulation (13) des deux branches (11, 12) dudit caisson.
